# EUROPÄISCHE PATENTSCHRIFT

(11) **EP 0 978 351 B1**
(45) Veröffentlichungstag und Bekanntmachung des Hinweises auf die Patenterteilung: **14.01.2004**
(21) Anmeldenummer: 99115094.7
(22) Anmeldetag: 06.08.1999
(51) Int. Cl.: B23Q 41/02, B23Q 39/02, B23Q 7/02

(54) **Vorrichtung aus vertikal angeordeneten Drehmaschinen**
Apparatus having vertically orientated lathes
Dispositif comportant des tours verticales

(30) Priorität: 07.08.1998 DE 19835868
(43) Veröffentlichungstag der Anmeldung: 09.02.2000
(73) Patentinhaber: Schuster, Helmut, D-86920 Denklingen (DE)
(72) Erfinder: Schuster, Helmut, D-86920 Denklingen (DE)
(74) Vertreter: Käck, Jürgen

(56) Entgegenhaltungen:
- EP-A- 0 310 219
- EP-A- 0 453 710
- EP-A- 0 477 715
- DE-A- 19 726 503
- US-A- 3 914 853

## Beschreibung

Die Erfindung betrifft eine Anordnung von Drehmaschinen. Speziell wird für eine Anordnung von mehreren Drehmaschinen die Übergabe der Werkstücke ermöglicht.

Für den rationellen Einsatz von Drehmaschinen zur Bearbeitung von Werkstücken nacheinander - gegebenenfalls mit unterschiedlichen Werkzeugen - sind in der Vergangenheit unterschiedliche Mehrspindelwerkzeugmaschinen vorgeschlagen worden. Eine solche Mehrspindeldrehmaschine ist aus der DE 195 04 369 bekannt. Dort umfaßt die Mehrspindeldrehmaschine ein Maschinengestell, einen am Maschinengestell drehbar gelagerten Spindelträger, mehrere an dem Spindelträger hängend angeordneten Werkstückspindeln. Mit einer solchen Mehrspindeldrehmaschine kann schon eine recht große Bearbeitungskapazität erreicht werden. Aus der Zeitschrift Produktion, Nr. 8 Februar 1997, Seite 10, ist zum Beispiel eine Mehrspindeldrehmaschine mir acht Spindeln bekannt.

Mehrspindeldrehmaschinen weisen aber grundsätzliche Nachteile auf, die durch die vorliegende Erfindung überwunden werden sollen. Einerseits sind Mehrspindeldrehmaschinen störungsanfällig, da die Bearbeitungsvorgänge dicht nebeneinander ausgeführt werden und sich gegenseitig beeinflussen können. Andererseits sind Mehrspindeldrehmaschinen wenig flexibel im Einsatz. Wenn z.B. ein Vorgang sieben oder noch weniger Bearbeitungsteilvorgänge notwendig macht, die alle ungefähr den gleichen Zeitaufwand erforderlich machen, so kann eine Mehrspindeldrehmaschine mit acht Spindeln nicht mehr richtig ausgenutzt werden. Weiterhin ist die Zugänglichkeit bei Wartung und Reparatur sehr stark eingeschränkt.

Die DE 196 48 810 A1 offenbart eine Bearbeitungsvorrichtung mit nebeneinander angeordneten Tandemspindeln, deren Drehachse vertikal verläuft. Ein linear beweglicher Werkstückträger führt in einer Horizontalbewegung ein zu bearbeitendes Werkstück einer der Spindeln zu oder führt das bearbeitete Werkstück ab. Außerhalb des Bearbeitungsbereichs der Tandemspindeln ist eine Wendeeinrichtung vorgesehen, die ein zu wendendes Werkstück vom Werkstückträger aufnimmt und das gewendete Werkstück auf diesem ablegt. Die nachveröffentlichte Zusatzanmeldung DE 197 26 503 A1 zur DE 196 48 810 A1 beschreibt drei nebeneinander angeordnete Vertikaldrehmaschinen mit einem horizontal neben den Drehmaschinen verlaufenden Transportband für die Werkstücke. Vom Transportband werden die Werkstücke durch ein je Drehmaschine zugeordnetes, bewegliches Shuttle aufgenommen und zum Arbeitsbereich der zugeordneten Drehmaschine transportiert und auch von dort nach der Bearbeitung zum Transportband geführt. Neben dem Transportband kann eine Wendeeinrichtung vorgesehen sein, die das Werkstück auf dem Transportband wendet. Das Transportband bzw. der Werkstückträger erfordern eine synchronisierte Aufnahme / Ablage des unbearbeiteten Werkstücks, des Halbfertigteils und des Fertigteils.

Bei der Anordnung von Bearbeitungsmaschinen gemäß der US 3,914,853, die den nächstkommenden Stand der Technik gemäss dem Oberbegriff von Anspruch 1 beschreibt, liegen vier Bearbeitungsstationen beabstandet auf einer Umfangslinie um eine vierarmige, drehbare Transporteinrichtung. Eine der Bearbeitungsstationen ist zugleich eine Ein-/Ausgabestation zum manuellen Beladen eines unbearbeiteten Werkstücks und zur Entnahme des bearbeiteten Werkstücks. Nachdem alle Bearbeitungsstationen mit der Bearbeitung fertig sind und die Ein-/Ausgabe des Werkstücks an der Ein-/Ausgabestationen abgeschlossen ist, werden alle Werkstücke durch 90° Drehung der Transporteinrichtung zur nächsten Bearbeitungsstelle befördert. In jedem Schritt bestimmt die Bearbeitungsstation mit der längsten Bearbeitungszeit die Bearbeitungszeit der anderen Stationen.

Es ist somit Aufgabe der Erfindung, eine Vorrichtung mit mehreren aneinandergereihten Drehmaschinen zum Bearbeiten von Werkstücken vorzusehen, die bei kleinem Raumbedarf eine Flexibilisierung des Werkstückdurchlaufs ermöglicht.

Die Aufgabe wird mit den Merkmalen gemäß Anspruch 1 gelöst.

Vorteilhafte Ausgestaltungen sind Gegenstand der Unteransprüche.

Die Maßnahmen der Erfindung haben dabei zunächst einmal zur Folge, daß die Vorrichtung leicht zugänglich ist, da die Drehachsen senkrecht angeordnet sind. Im Gegensatz zu Mehrspindeldrehmaschinen sind gemäß der Erfindung alle zur Vorrichtung gehörenden Drehmaschinen Einzelmaschinen, die einen eigenen Drehantrieb aufweisen. Den vollen Grad an Modularität erhält die Vorrichtung dadurch, daß zwischen den Drehmaschinen jeweils eine Rotations-Schwenkeinrichtung (Handling) vorgesehen ist, mit der das Werkstück nach der Bearbeitung durch horizontales Schwenken von einer der Drehmaschinen zur nächsten Drehmaschine übergeben werden kann.

Bei der Vorrichtung kann vorteilhafterweise mindestens eine der Drehmaschinen eine zweite, in einem verstellbaren Abstand zu der Hauptspindel angeordnete, mit dieser synchron rotationsangetriebene zweite Spindel aufweisen, während z.B. eine andere der Drehmaschinen eine Rollenlunette zum Unterstützen des Werkstückes aufweist. Besonders vorteilhaft ist die Vorrichtung, wenn die Schwenkeinrichtungen die Werkstücke um ca. 180° schwenken, daß heißt, daß die einzelnen Drehmaschinen in einer Reihe nebeneinander angeordnet sind. Wenn ein längliches Werkstück vorteilhafterweise von zwei Seiten bearbeitet werden soll, so kann zwischen zumindest zwei Drehmaschinen eine Wendeeinrichtung vorgesehen werden, mit der das Werkstück vertikal um ca. 180° gewendet werden kann, wobei die Wendeeinrichtung zwischen zwei Schwenkeinrichtungen - an der Stelle, an der sonst eine der Drehmaschinen angeordnet wäre, angeordnet ist. Vor der ersten Drehmaschine kann eine erste Schwenkeinrichtung vorgesehen sein, mit der das Werkstück als Rohling aus einer Zuführung der ersten Drehmaschine zugeführt werden kann. Diese erste Schwenkvorrichtung erhält das Werkstück dann zum Beispiel aus einer Schneideeinrichtung, mit der der Rohling von langgestrecktem Werkgut abgeschnitten werden kann.

Die vorgenannten sowie die beanspruchten und in dem nachfolgenden Ausführungsbeispiel beschriebenen, erfindungsgemäß zu verwendenden Elemente unterliegen in ihrer Größe, Formgestaltung und technischen Konzeptionen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnung, in der - beispielhaft - eine erfindungsgemäße aus mehreren Drehmaschinen bestehende Vorrichtung dargestellt ist.

In den Zeichnungen zeigt
- Fig. 1: eine Ansicht der erfindungsgemäßen Vorrichtung von vorn und

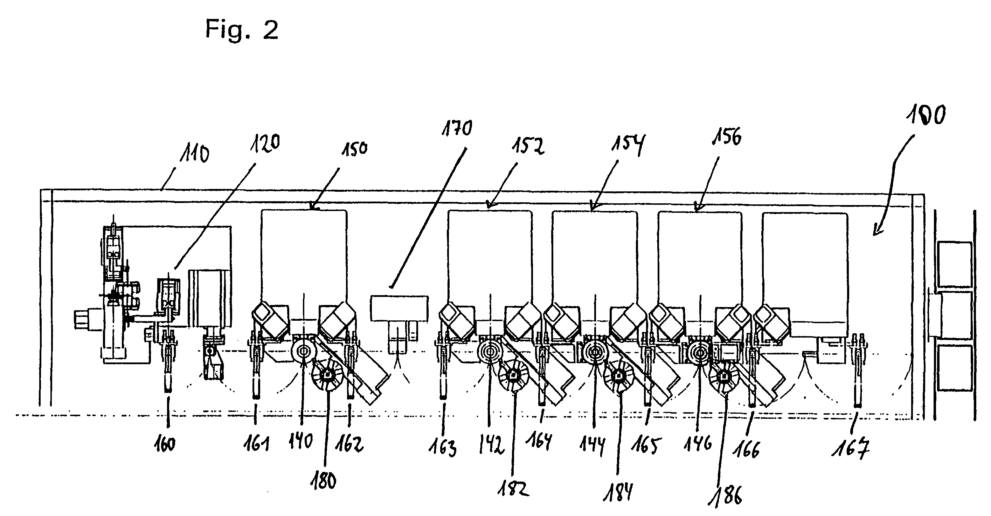

- Fig. 2: die Vorrichtung aus Fig.1 von oben.

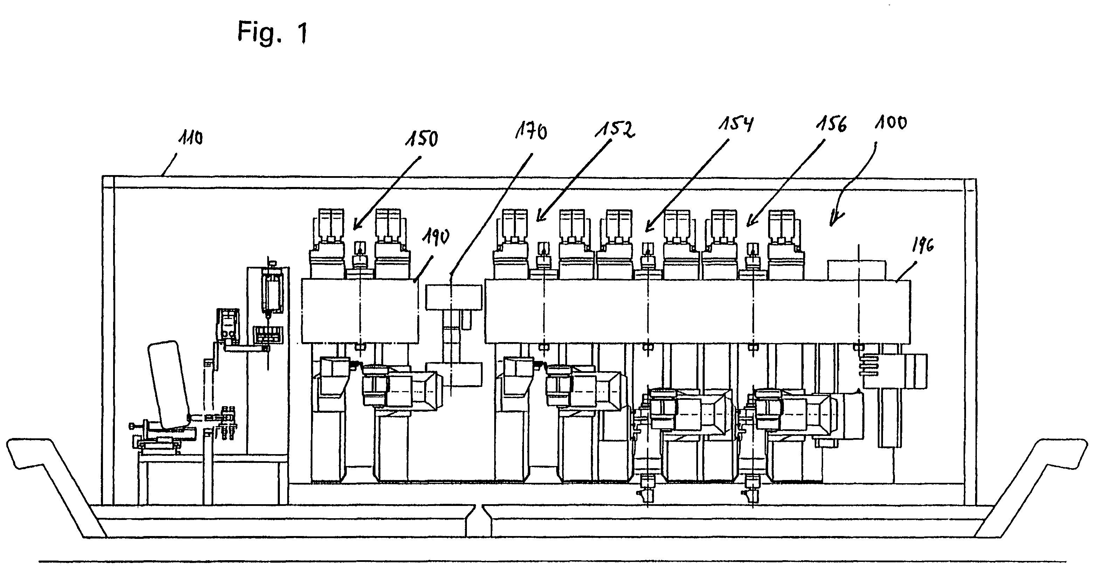

In der in Figur 1 als ganzes mit 100 bezeichneten Vorrichtung sind vier einzelne Drehmaschinen 150, 152, 154, 156 mit jeweils vertikaler Drehachse enthalten. Jede dieser Drehmaschinen weist eine Hauptspindel 140, 142, 144, 146 zur Aufnahme des Werkstückes auf. Im Ausführungsbeispiel ist diese Hauptspindel jeweils oben angebracht. Die einzelnen Drehmaschinen sind zudem mit einer Rollenlunette zur seitlichen Unterstützung des Werkstückes während der rotierenden Bearbeitung bzw. mit einer unten angebrachten, synchron zur Hauptspindel 140, 142, 144, 146 rotierenden weiteren Spindel (Synchronspindel) ausgerüstet.

An jeder Drehmaschine ist im vorderen, im Ausführungsbeispiel im rechten Bereich eine revolverartige Bereitstellungseinrichtung 180, 182, 184, 186 für verschiedene Bearbeitungswerkzeuge vorgesehen. Vorteilhaft ist es, diese Einrichtung in einem Winkel von ca. 45° seitwärts vorn von der Drehmaschine anzuordnen.

An jeder Drehmaschine ist mindestens eine Rotationsschwenkeinrichtung 162, 163, 164, 165, 165, 166 so angeordnet, daß das Werkstück horizontal von einer Drehmaschine 150, 152, 154, 156 zur nächsten durch seitliches Schwenken transportiert werden kann.

Im Ausführungsbeispiel ist zwischen der ersten und der zweiten Drehmaschine eine Wendeeinrichtung 170 vorgesehen, mit der das Werkstück um eine in etwa waagerecht liegende Drehachse gedreht werden kann, um zu ermöglichen, daß das Werkstück - in diesem Fall nach der Bearbeitung in der ersten Drehmaschine 150 gewendet werden kann. Diese Wendeeinrichtung 170 ist sozusagen an Stelle einer Drehmaschine in die Vorrichtung eingefügt.

Vor der ersten Drehmaschine ist eine Schneideeinrichtung 120 für langgestrecktes Werkgut vorgesehen. Das Werkgut wird aus einer Fördereinrichtung zugeführt und nach dem Schneiden mit einer vor der ersten Drehmaschine angeordneten Rotationsschwenkeinrichtung der ersten Drehmaschine 150 zugeführt.

Hinter der letzten Drehmaschine 156 ist eine zusätzliche Schwenkeinrichtung 167 zur Versorgung des bearbeiteten Werkstückes vorgesehen.

Die Vorrichtung 100 ist als Ganzes in einem Gehäuse 110 untergebracht, das nach oben und zu den Seiten geschlossen ist. Dieses Gehäuse ermöglicht es somit, daß die Drehmaschinen von vorn zugänglich sind. Es kann aber vorgesehen sein, daß das Gehäuse auch nach vorn verschlossen werden kann.

Zusätzlich sind im Ausführungsbeispiel die Drehmaschinen nach vorn in Höhe des Bearbeitungsvorganges mit einer Verkleidung versehen, um den notwendigen Arbeitsschutz zu gewährleisten.

## Patentansprüche

1. Vorrichtung (100) zum Bearbeiten von Werkstücken mit mindestens zwei Drehmaschinen (150, 152, 154, 156), die jeweils eine vertikal eingerichtete, rotationsangetriebene Hauptspindel zum Einspannen des Werkstückes und mindestens eine Einrichtung (140, 142, 144, 146) zur Aufnahme mehrerer Bearbeitungswerkzeuge aufweisen, **dadurch gekennzeichnet, dass** die Drehachsen aller Drehmaschinen (150, 152, 154, 156) im wesentlichen vertikal angeordnet sind, dass die Drehmaschinen aneinandergereiht sind, und dass zwischen den Drehmaschinen (150, 152, 154, 156) jeweils eine Schwenkeinrichtung (161, 162, 163, 164, 165, 166) angeordnet ist, mit der das Werkstück nach der Bearbeitung durch horizontales Schwenken von einer der Drehmaschinen zur nächsten Drehmaschine übergeben werden kann.

2. Vorrichtung nach Anspruch 1, **dadurch gekennzeichnet, dass** mindestens eine der Drehmaschinen (150, 152, 154, 156) eine zweite, in einem verstellbaren Abstand zu der Hauptspindel angeordnete, mit dieser synchron rotationsangetriebene zweite Spindel aufweist.

3. Vorrichtung nach Anspruch 1 oder 2, **dadurch gekennzeichnet, dass** mindestens eine der Drehmaschinen (150, 152, 154, 156) eine Rollenlunette zum Unterstützen des Werkstückes aufweist.

4. Vorrichtung nach einem der Ansprüche 1 bis 3, **dadurch gekennzeichnet, dass** die Schwenkeinrichtungen (161, 162, 163, 164, 165, 166, 167) die Werkstücke um ca. 180° schwenken.

5. Vorrichtung nach einem der Ansprüche 1 bis 4, **dadurch gekennzeichnet, dass** zwischen zumindest zwei Drehmaschinen (150, 152) eine Wendeeinrichtung (170) vorgesehen ist, mit der das Werkstück vertikal um ca. 180° gewendet werden kann und dass die Wendeeinrichtung zwischen zwei Schwenkeinrichtungen (162, 163) angeordnet ist.

6. Vorrichtung nach einem der Ansprüche 1 bis 5, **dadurch gekennzeichnet, dass** eine erste Schwenkeinrichtung (160) vorgesehen ist, mit der das Werkstück als Rohling aus einer Zuführung der ersten Drehmaschine zugeführt werden kann.

7. Vorrichtung nach Anspruch 6, **dadurch gekennzeichnet, dass** die Zuführung (120) eine Schneideeinrichtung (120) aufweist, mit der der Rohling von langgestrecktem Werkgut abgeschnitten werden kann.

8. Vorrichtung nach einem der vorstehenden Ansprüche, **dadurch gekennzeichnet, dass** hinter der letzten, an der letzten Drehmaschinen (156) vorgesehenen Schwenkeinrichtung (166) eine weitere Schwenkeinrichtung (167) zum Abtransport des Werkstückes nach der Bearbeitung in der Vorrichtung (100) vorgesehen ist.

9. Vorrichtung nach einem der vorstehenden Ansprüche, **dadurch gekennzeichnet, dass** jede der Drehmaschinen (150, 152, 154, 156) eine revolverartige Aufnahme (180, 182, 184, 186) für die Bearbeitungswerkzeuge aufweisen.

## Claims

1. Apparatus (100) for machining workpieces with at least two lathes (150, 152, 154, 156) each having a vertically set, rotationally driven main spindle for clamping the workpiece and at least one device (140, 142, 144, 146) for receiving multiple machining tools,
**characterized in that** the rotational axes of all of the lathes (150, 152, 154, 156) are substantially vertically disposed, that the lathes are lined up with respect to each other, and that a swiveling device (161, 162, 163, 164, 165, 166) is each disposed between the lathes (150, 152, 154, 156), by which the workpiece can be passed from one of the lathes to the next lathe by horizontally swiveling after machining.

2. Apparatus according to claim 1, **characterized in that** at least one of the lathes (150, 152, 154, 156) has a second spindle disposed in an adjustable distance to the main spindle and rotationally driven in synchronism with this one.

3. Apparatus according to claim 1 or 2, **characterized in that** at least one of the lathes (150, 152, 154, 156) has a roller V-rest for supporting the workpiece.

4. Apparatus according to any one of claims 1 to 3, **characterized in that** the swiveling devices (161, 162, 163, 164, 165, 166, 167) swivel the workpieces by ca. 180°.

5. Apparatus according to any one of claims 1 to 4, **characterized in that** a turning device (170) is provided between at least two lathes (150, 152), by which the workpiece can be turned vertically by ca. 180°, and that the turning device is disposed between two swiveling devices (162, 163).

6. Apparatus according to any one of claims 1 to 5, **characterized in that** a first swiveling device (160) is provided, by which the workpiece can be supplied as a blank from a supply to the first lathe.

7. Apparatus according to claim 6, **characterized in that** the supply (120) has a cutting device (120), by which the blank can be cut off from elongated stock.

8. Apparatus according to any one of the preceding claims, **characterized in that** behind the last swiveling device (166) provided to the last lathe (156), a further swiveling device (167) for conveying the workpiece after machining in the apparatus (100) is provided.

9. Apparatus according to any one of the preceding claims, **characterized in that** each one of the lathes (150, 152, 154, 156) has a turret-like receptacle (180, 182, 184, 186) for the machining tools.

## Revendications

1. Dispositif (100) pour le traitement de pièces à usiner avec au moins deux tours (150, 152, 154, 156) qui présentent à chaque fois une broche principale entraînée de façon rotative et disposée de façon verticale pour serrer la pièce et au moins un dispositif (140, 142, 144, 146) pour recevoir plusieurs outils de traitement, **caractérisé en ce que** les axes de rotation de tous les tours (150, 152, 154, 156) sont disposés essentiellement de façon verticale, **en ce que** les tours sont alignés l'un derrière l'autre et **en ce qu'**entre les tours (150, 152, 154, 156) à chaque fois un dispositif de pivotement 161, 162, 163, 164, 165 est disposé avec lequel la pièce à usiner peut être transmis après le traitement, par un pivotement horizontal, d'un tour des tours vers le tour suivant.

2. Dispositif selon la revendication 1, **caractérisé en ce qu'**au moins un des tours (150, 152, 154, 156) présente une deuxième broche disposée à une distance réglable par rapport à la broche principale et qui est entraînée de façon synchrone et rotative avec la broche principale.

3. Dispositif selon la revendication 1 ou 2, **caractérisé en ce qu'**au moins un des tours (150, 152, 154, 156) présente une lunette à rouleau pour soutenir la pièce.

4. Dispositif selon une des revendications 1 à 3, **caractérisé en ce que** les dispositifs de basculement (161, 162, 163, 164, 165, 166, 167) pivotent les pièces d'environ 180°.

5. Dispositif selon une des revendications 1 à 4, **caractérisé en ce qu'**entre au moins deux tours (150, 152), il est prévu un dispositif de virage (170) avec lequel la pièce à usiner peut être utilisée de façon verticale à environ 180° et **en ce que** le dispositif de virage est disposé entre deux dispositifs de pivotement (162, 163).

6. Dispositif selon une des revendications 1 à 5, **caractérisé en ce qu'**un premier dispositif de pivotement (160) est prévu avec lequel la pièce à usiner peut être amenée en tant qu'ébauche à partir d'une amenée du premier tour.

7. Dispositif selon la revendication 6, **caractérisé en ce que** l'amenée (120) présente un dispositif de coupe (120) avec lequel l'ébauche peut être découpée de la matière à usiner allongée.

8. Dispositif selon une des revendications précédentes, **caractérisé en ce que** derrière le dernier dispositif de pivotement (166) prévu sur le dernier tour (156), il est prévu un autre dispositif de pivotement (167) pour transporter la pièce à usiner après le traitement dans le dispositif (100).

9. Dispositif selon une des revendications précédentes, **caractérisé en ce que** chaque tour (150, 152, 154, 156) présente une réception (180, 182, 184, 186) de type revolver pour les outils de traitement.
